# EUROPEAN PATENT APPLICATION

(11) **EP 2 009 912 A2**
(43) Date of publication of application: **31.12.2008**
(21) Application number: 08159271.9
(22) Date of filing: 27.06.2008
(51) Int. Cl.: H04N 5/44

(54) **Image displaying method and display apparatus using the same**

(30) Priority: 27.06.2007 KR 20070063741
(71) Applicant: Samsung Electronics Co., Ltd., Suwon-si, Gyeonggi-do (KR)
(72) Inventor: Yu, Dal-young, Maetan 3-dong Yeongtong-gu,Suwon-si,Gyeonggi-do (KR); Kim, Mi-kyung, Pungdeokcheon-dong, Yongin-si Gyeonggi-do (KR)
(74) Representative: D'Halleweyn, Nele Veerle Trees Gertrudis

(57) **Abstract**

An image displaying method and a display apparatus using the same are provided. A broadcast forwarding device processes OSD. In a poor reception state of a broadcasting signal received from the broadcast forwarding device, the display apparatus displays an image informing of the bad reception state. The display apparatus displays the stored image including a guidance message through the decoding, rather than the OSD. Accordingly, even without a component for generating the OSD, the display apparatus can show the necessary message to a user.

## Description

### CROSS-REFERENCE TO RELATED APPLICATIONS

This application claims priority from Korean Patent Application No. 10-2007-0063741, filed on June 27, 2007, in the Korean Intellectual Property Office, the disclosure of which is incorporated herein by reference in its entirety.

### BACKGROUND OF THE INVENTION

### Field of the Invention

Apparatuses and methods consistent with the present invention relate to displaying an image, and more particularly, displaying no reception of a broadcasting signal, and a display apparatus.

### Description of the Related Art

When a broadcast forwarding device including a tuner receives a broadcasting signal from a broadcast provider over an antenna, a display apparatus displays images corresponding to the received broadcasting signal. Typically, examples of the display apparatus include a television (TV) and examples of the broadcast forwarding device include a set-top box.

The display apparatus is wirelessly connectable to the broadcast forwarding device. In the wireless connection, the display apparatus wirelessly receives the broadcasting signal from the broadcast forwarding device. Mostly, the display apparatus and the broadcast forwarding device in the wireless connection form a set.

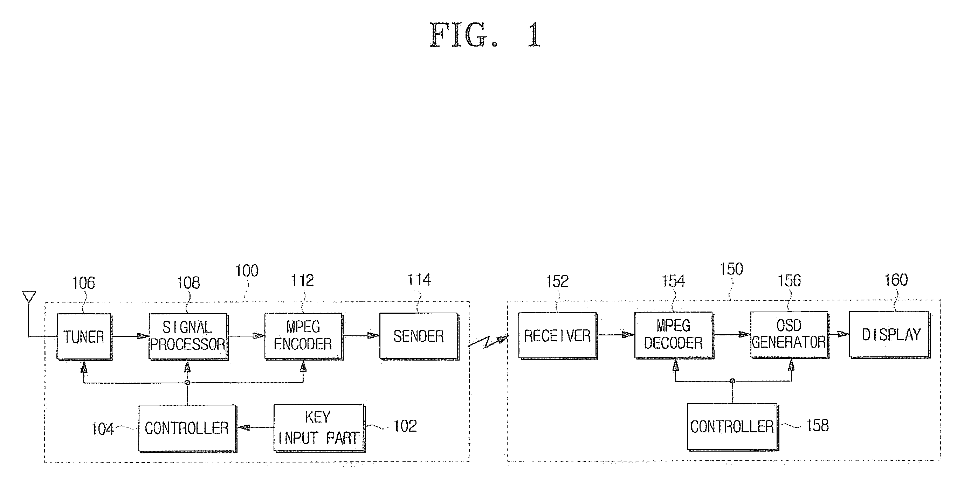

FIG. 1 is a block diagram of a broadcast forwarding device and a display apparatus in a conventional wireless broadcasting reception system. The broadcast forwarding device 100 of FIG. 1 includes a key input part 102, a controller 104, a tuner 106, a signal processor 108, an MPEG encoder 112, and a sender 114.

When a channel is selected through the key input part 102, the tuner 106 receives a broadcasting signal of the selected channel under the control of the controller 104. The signal processor 108 performs an image processing on the received broadcasting signal. The MPEG encoder 112 compresses the processed broadcasting signal and sends the compressed signal to the display apparatus 150 via the sender 114.

The display apparatus 150 includes a receiver 152, an MPEG decoder 154, an OSD generator 156, a controller 158, and a display 160. The MPEG decoder 154 decodes the broadcasting signal received from the broadcast forwarding device 100 via the receiver 152. The OSD generator 156 generates a menu related to the screen adjustment under the control of the controller 158 and outputs the generated menu to the display 160.

However, in the conventional wireless broadcasting reception system, the screen adjustment menu is generated and displayed at the display apparatus 150, and the broadcast forwarding device 100 controls and realizes the adjustment function selected in the screen adjustment menu.

The on screen display (OSD) generator 156, which generates the screen adjustment menu, is provided in the display apparatus 150. The key input part 102 for selecting and regulating the adjustment function in the screen adjustment menu, the signal processor 108 for processing the signal as input from the key input part 102, and the controller 104 for controlling those operations are provided in the broadcast forwarding device 100.

Accordingly, as the display apparatus 150 generates the screen adjustment menu and the broadcast forwarding device 100 realizes the screen adjustment function, much data exchange is required between the display apparatus 150 and the broadcast forwarding device 100.

In addition, there is a considerable gap between the time point of the screen adjustment by the user and the time point of the actual adjustment.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides an image displaying method for decoding and displaying a broadcasting signal received from a broadcast forwarding device by performing an OSD processing and executing a function selected in the OSD at the broadcast forwarding device, and a display apparatus using the method.

Another aspect of the present invention provides a method for displaying an image which informs of a poor reception state, in a display when the reception state is hostile by processing an OSD at a broadcast forwarding device, and a display apparatus using the method.

According to an aspect of the present invention, an image displaying method includes determining a strength of an input signal; and representing a stored image in a video layer to display the stored image in a display when the determined strength of the input signal is less than a preset strength.

The image may be displayed in the same size as a size of the display.

The image may include a guidance message displayed in a certain area.

The image may include a background screen displayed in the remaining area excluding the certain area.

The guidance message may inform of a reception state.

The representing operation may include decoding the stored image when the strength of the input signal is less than the preset strength; and displaying the decoded image.

According to the aspect of the present invention, a display apparatus includes a storage which stores an image; and a controller which controls to represent the stored image in a video layer to display the image stored to the storage when a strength of an input signal received from outside is less than a preset strength.

The image may be displayed in the same size as a size of the display.

The image may include a guidance message displayed in a certain area.

The image may include a background screen displayed in the remaining area excluding the certain area.

The guidance message may inform of a reception state.

The input signal may be wirelessly input from a device which receives a broadcasting signal from a broadcasting station.

The display apparatus may further include a decoder which decodes the image stored to the storage; and a display which displays the decoded image.

The stored image may be reproduced and displayed not using an OSD.

According to the aspect of the present invention, a broadcasting reception system includes an image forwarding device which compresses an image signal with a menu added and sends the compressed image signal including the added menu; and a display apparatus which decodes the compressed image signal including the added menu received from the image forwarding device, and displays an image of the decoded image signal including the added menu.

The image may include a guidance message displayed in a certain area, and a background screen displayed in the remaining area excluding the certain area.

### BRIEF DESCRIPTION OF THE DRAWING FIGURES

The above and/or other aspects of the present invention will be more apparent by describing certain exemplary embodiments of the present invention with reference to the accompanying drawings, in which:

FIG. 1 is a block diagram of a broadcast forwarding device and a display apparatus in a conventional wireless broadcasting reception system;

FIG. 2 is a block diagram of a broadcast forwarding device and a display apparatus in a wireless broadcasting reception system according to an exemplary embodiment of the present invention;

FIG. 3 is a flowchart of an image displaying method of the display apparatus according to an exemplary embodiment of the present invention;

FIG. 4A is a diagram of an image displaying method of a conventional display apparatus;

FIG. 4B is a detailed diagram of the image displaying method of the display apparatus according to an exemplary embodiment of the present invention; and

FIG. 5 is a flowchart of an image displaying method of the display apparatus according to another exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

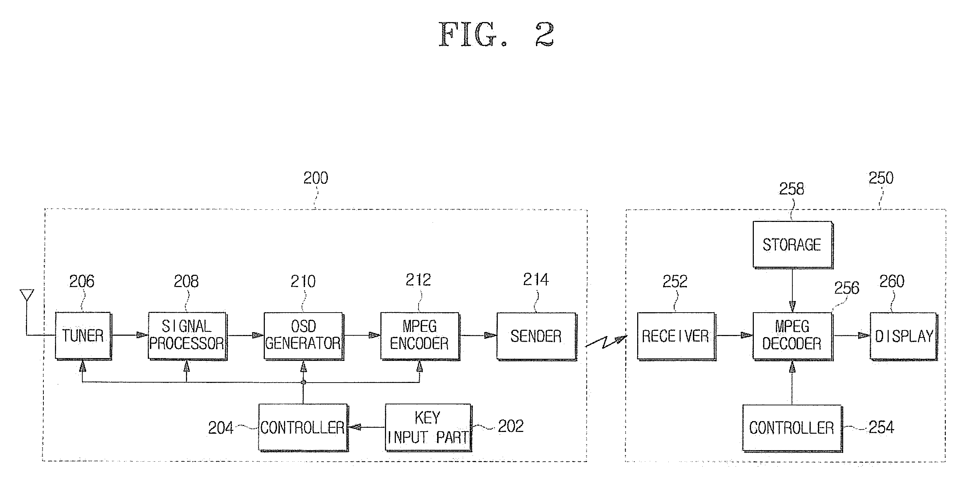

FIG. 2 is a block diagram of a broadcast forwarding device and a display apparatus in a wireless broadcasting reception system according to an exemplary embodiment of the present invention.

In the wireless broadcasting reception system, the broadcast forwarding device 200 and the display apparatus 250 are connected to each other wirelessly. The broadcast forwarding device 200 sends a broadcasting signal to the display apparatus 250, generates a menu, and carries out a function to adjust a screen. In an exemplary embodiment, the menu may be a screen adjustment menu. The following description describes the operation of the invention with a screen adjustment menu, but invention contemplates other types of menus that do not adjust the screen. The display apparatus 250 decodes and displays the broadcasting signal received from the broadcast forwarding device 200.

The broadcast forwarding device 200 of FIG. 2 includes a key input part 202, a controller 204, a tuner 206, a signal processor 208, an OSD generator 210, an MPEG encoder 212, and a sender 214. In an exemplary embodiment, the sender 214 is a transmitter.

The key input part 202 includes keys for selecting a channel and keys for requesting, selecting, and controlling the screen adjustment menu. When a channel is selected through the key input part 202, the tuner 206 receives a broadcasting signal of the selected channel under the control of the controller 204.

The signal processor 208 decompresses the received broadcasting signal and processes the decompressed broadcasting signal under the control of the controller 204. When the screen adjustment menu is requested through the key input part 202, the OSD generator 210 generates the screen adjustment menu, combines the generated screen adjustment menu with the broadcasting signal processed at the signal processor 208, and then outputs the combined signal under the control of the controller 204.

The MPEG encoder 212 compresses the processed broadcasting signal into the MPEG format and sends the compressed broadcasting signal to the display apparatus 250 via the sender 214.

In doing so, when a screen adjustment function is selected through the key input part 202 in the screen adjustment menu and the selected adjustment function is executed, the signal processor 208 processes the broadcasting signal according to the input of the key input part 202.

The MPEG encoder 212 compresses the broadcasting signal processed based on the screen adjustment function and sends the compressed broadcasting signal to the display apparatus 250 via the sender 214. Hence, the screen is adjusted.

By applying the input in the OSD directly to the broadcasting signal, the delay between the time point of the user's screen adjustment and the time point of the actual adjustment can be addressed.

The display apparatus 250 wirelessly receives the broadcasting signal from the broadcast forwarding device 200. The broadcast forwarding device 200 and the display apparatus 250 use a wireless interface. In an exemplary embodiment the wireless interface is one of wireless interfaces compliant with the IEEE 802.11a, b, g and n, and other wireless interfaces.

The display apparatus 250 includes a receiver 252, a controller 254, an MPEG decoder 256, a storage 258, and a display 260.

The MPEG decoder 256 decodes the broadcasting signal received from the broadcast forwarding device 200 through the receiver 252 and outputs the decoded broadcasting signal to the display 260.

When a strength of the broadcasting signal received from the broadcast forwarding device 200 through the receiver 252 is less than a certain strength, the MPEG decoder 256 MPEG decodes an image stored in the storage 258 and outputs the decoded image to the display 260 under the control of the controller 254. In an exemplary embodiment, the certain strength may be a preset strength and the image stored in the storage 258 may be pre-stored.

The storage 258 stores an image including a message. Herein, the message may be a guidance message including a message indicating the reception state, a text message, etc.

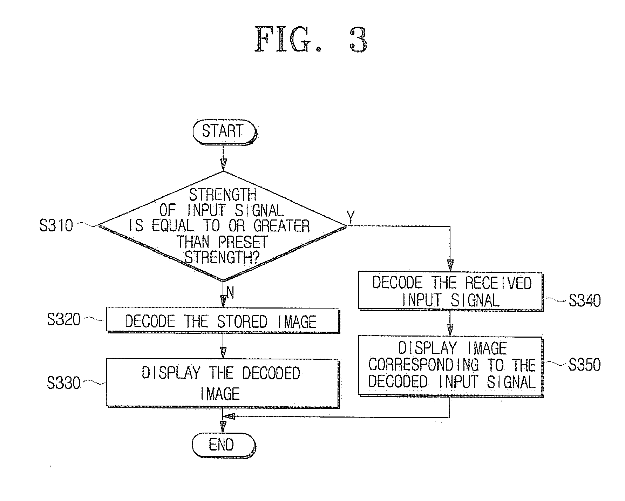

FIG. 3 is a flowchart of an image displaying method of the display apparatus according to an exemplary embodiment of the present invention.

In operation 310, the controller 254 of the display apparatus 250 determines whether the strength of the input signal received from the broadcast forwarding device 200 through the receiver 252 is equal to or greater than the certain strength. When the strength of the input signal received from the broadcast forwarding device 200 is weak, the image including the message is displayed.

For example, the input signal is weak when the broadcast forwarding device 200 attempts to connect to the display apparatus 250, when the connection between the broadcast forwarding device 200 and the display apparatus 250 becomes unstable, and when the power is not supplied to the broadcast forwarding device 200.

When the strength of the input signal received from the broadcast forwarding device 200 is less than the certain strength, the controller 254 controls the MPEG decoder 256 to decode the image including the message stored to the storage 258 in operation 320. That is, the image including the message stored to the storage 258 is reproduced through the decoding, not through the OSD processing.

For example, the image including the message in the center of the image may be a message such as 'Connecting to the broadcast forwarding device', 'No broadcasting signal from the broadcast forwarding device', or 'Connection error with the broadcast forwarding device'.

Notably, the image including the message is not an image generated by superimposing a message, generated through the OSD, on the broadcasting image or a specific image broadcast in real time.

More specifically, the image including the message is a single image which shows the message in a part of the image and the background screen is displayed in the remaining area. Herein, the background screen may be in a specific color or another image.

Mostly, the image generated using the OSD is smaller than the display 260 in size. Herein, like the general broadcasting image, the size of the image including the message may be the same as the size of the display 260.

The image including the message may be generated in the same size as the display 260 and then stored, and may decoded and displayed in the same size as the display 260.

While the image generated using the OSD is a still image, the image including the message can be moving pictures in which the message in the center of the image moves horizontally or vertically.

The display 260 displays the decoded image including the message in operation 330.

When the strength of the input signal is equal to or greater than the certain strength in operation 310, the controller 254 controls the MPEG decoder 256 to decode the received input signal in operation 340.

In operation 350, the controller 254 displays the image corresponding to the decoded input signal in the display 260. The displayed image is the broadcasting image, or the image including the OSD added to the broadcasting image.

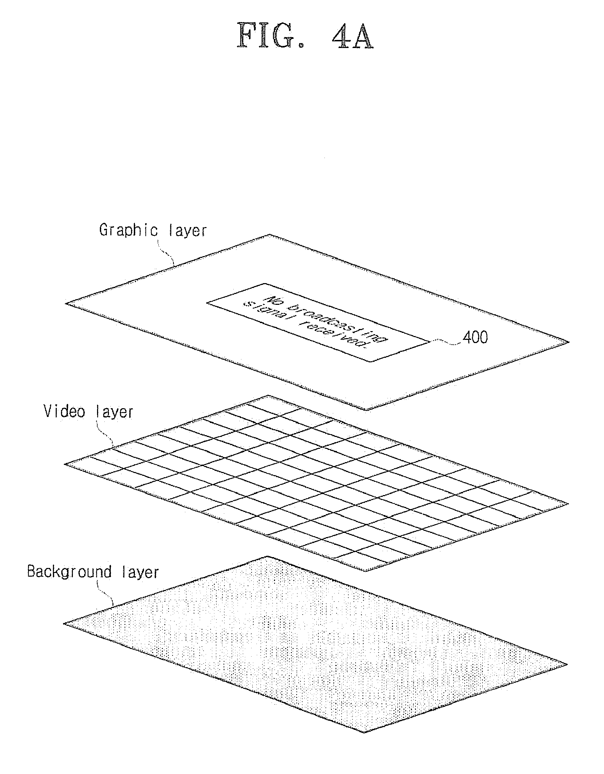

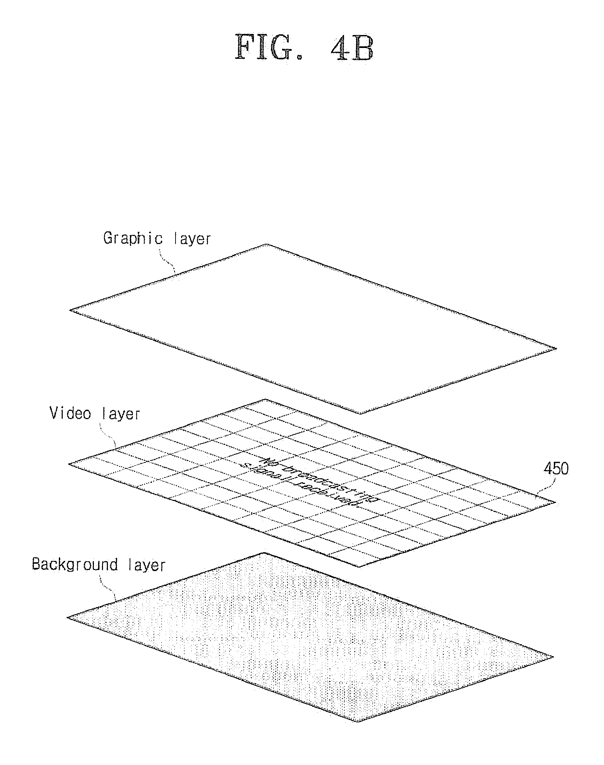

FIG. 4A is a diagram of an image displaying method of a conventional display apparatus, and FIG. 4B is a detailed diagram of the image displaying method of the display apparatus according to an exemplary embodiment of the present invention.

FIGS. 4A and 4B show general display layers. The display layers include a graphic layer showing the OSD, a video layer showing the image, and a background layer showing the background.

Particularly, FIG. 4A depicts the OSD. The OSD screen 400 in the graphic layer is superimposed on the image of the video layer and the background of the background layer.

FIG. 4B depicts the decoding scheme of the present invention. The image 450 including the message is decoded and in the video layer. In other words, the image 450 including the message is in the video layer, rather than being an image with the image of the OSD in the graphic layer superimposed over the image in the video layer.

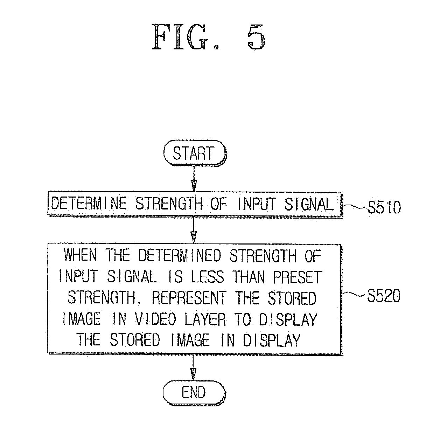

FIG. 5 is a flowchart of an image displaying method of the display apparatus according to another exemplary embodiment of the present invention.

In operation 510, the display apparatus 250 determines the strength of the input signal received from the broadcast forwarding device 200.

When the determined strength of the input signal is less than the certain strength, the display apparatus 250 uses the pre-stored image in the video layer to display the stored image in the display 260 in operation 520.

As the broadcast forwarding device 200 performs the OSD processing and executes the function selected in the OSD, the display apparatus 250 merely decodes and displays the broadcasting signal received from the broadcast forwarding device 200.

Since the broadcast forwarding device 200 processes the OSD, the display apparatus 250, which cannot display the image using the OSD, decodes and displays the pre-stored image including the message, to thus show the message to a user.

In the above exemplary embodiments of the present invention, when no broadcasting signal is received from the broadcast forwarding device 200, the image including the message is decoded and displayed by way of example.

In some cases where it is needed to show the message to the user, the image including the relevant message can be pre-stored, decoded and displayed when necessary.

While the stored image including the message is decoded and then displayed, the stored image including the message, which does not need to be decoded; that is, which is not encoded at first, can be read and displayed directly when necessary.

As set forth above, even when the display apparatus does not include a component for generating the OSD, the necessary message can be provided to the user to thus increase the user's convenience.

Without a horizontal/vertical (H/V) sync generator which generates a sync signal, the display apparatus can display the message.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An image displaying method comprising:
determining a strength of an input signal; and
representing a stored image in a video layer to display the stored image in a display if the determined strength of the input signal is less than a preset strength.

2. The image displaying method of claim 1, wherein the stored image is displayed in a first size and the first size is equivalent to a size of the display.

3. The image displaying method of any one of claims 1 and 2, wherein the stored image comprises a message displayed in a first area.

4. The image displaying method of claim 3, wherein the stored image further comprises a background screen displayed in a second area excluding the first area.

5. The image displaying method of claim 3, wherein the message indicates a reception state.

6. The image displaying method of any one of claims 1 to 5, wherein, in the displaying operation, the stored image is reproduced and displayed not using an On Screen Display (OSD).

7. A display apparatus comprising:
a storage which stores an image; and
a controller which controls to represent the stored image in a video layer to display the stored image if a strength of an external input signal received is less than a preset strength.

8. The display apparatus of claim 7, wherein the stored image is displayed in a first size and the first size is equivalent to a size of the display apparatus.

9. The display apparatus of any one of claims 7 and 8, wherein the stored image comprises a message displayed in a first area.

10. The display apparatus of claim 9, wherein the stored image comprises a background screen displayed in a second area excluding the first area.

11. The display apparatus of claim 9, wherein the message indicates a reception state.

12. The display apparatus of claim 7, wherein the external input signal is wirelessly input from a device which receives a broadcasting signal from a broadcasting station.

13. The display apparatus of any one of claims 8 to 12, wherein the stored image is reproduced and displayed not using an On Screen Display (OSD).

14. The display apparatus of claim 12, wherein the device comprises:
a generator which generates a menu and adds the generated menu to an image signal to generate a first signal;
an encoder which compresses the first signal; and
a sender which sends the compressed first image signal to an external device.

15. The display apparatus of claim 14, wherein the device further comprises a signal processor which processes the image signal according to a user command input received through the menu and outputs the processed image signal to the generator.
